(19) Europäisches Patentamt
European Patent Office
Office européen des brevets

(11) Publication number: **0 438 239 A2**

# (12) EUROPEAN PATENT APPLICATION

(21) Application number: **91300214.3**

(51) Int. Cl.$^5$: **C08L 79/04**, C08G 73/06

(22) Date of filing: **11.01.91**

(30) Priority: **16.01.90 US 464804**

(43) Date of publication of application:
**24.07.91 Bulletin 91/30**

(84) Designated Contracting States:
**AT BE CH DE DK ES FR GB GR IT LI LU NL SE**

(71) Applicant: **ROHM AND HAAS COMPANY**
**Independence Mall West**
**Philadelphia Pennsylvania 19105 (US)**

(72) Inventor: **Bortnick, Newman Mayer**
**509 Oreland Mill Road**
**Oreland, Pennsylvania 19075 (US)**
Inventor: **Queenan, Robin Bepler**
**1225 Hunt Club Lane**
**Media, Pennsylvania 19063 (US)**
Inventor: **Harvey, Noel Gray**
**1802 Maple Circle**
**Lansdale, Pennsylvania 19446 (US)**
Inventor: **Cinoman, Douglas Samuel**
**1970 New Rodgers Road, Apt. L-15**
**Levittown, Pennsylvania 19056 (US)**
Inventor: **Hallden-Abberton, Michael Paul**
**964 Whitney Lane**
**Maple Glen, Pennsylvania 19002 (US)**
Inventor: **Cohen, Leslie Alan**
**2550 Creek Road**
**Langhorne, Pennsylvania 19047 (US)**
Inventor: **Goldman, Theodore Daniel**
**1290 General DeFermoy Road Washington's Crossing**
**Pennsylvania 18977 (US)**

(74) Representative: **Angell, David Whilton et al**
**ROHM AND HAAS (UK) LTD. European Operations Patent Department Lennig House**
**2 Mason's Avenue**
**Croydon CR9 3NB (GB)**

## (54) Compatibilizing polymeric additive.

(57) Polymers containing glutarimide units are useful in compatibilizing blends of two or more polymers to improve physical properties, especially modulus and heat distortion values. The polyglutarimides are especially useful when the polymers to be blended are incompatible with each other, but separately compatible with the polyglutarimide. Compatibilization with the polyglutarimide may be enhanced in some cases by a grafting reaction between the polyglutarimide, if it also contains acid or anhydride functionality, and one or more of the polymers to be blended.

EP 0 438 239 A2

# COMPATIBILIZINC POLYMERIC ADDITIVE

This invention is concerned with blends of polymer, compatibilized with polyglutarimides, having attractive physical properties and processes for preparing such blends.

It is well-known that most mixtures or blends of two polymers show incompatibility between the polymers, and that the properties of the blend are usually poorer than an average calculated from the properties of each polymer. It is further known that some polymers are compatible to the extent that one component becomes dispersed within the other and the physical properties seen are often enhanced over those predicted from the properties of each polymer. Further, some few polymers are truly miscible, to the extent that the blends components can be intimately mixed with other, the dispersion of one component in the other being very fine ; this results in the blend behaving as an average of the two components.

Compatibility is generally defined by the properties of the blend ; when two polymers are compatible, their mixture will provide a stable blend possessing a useful balance of mechanical properties, such as tensile strength, tensile elongation, impact strength, and the like. Often these properties are improved over the properties of the component which is the continuous phase in the blend. The two polymers may be in domains large enough to produce a pronounced effect on optical clarity, and separate domains often may be readily seen by electron microscopy. Further, the polymers may exhibit two glass temperatures when measured by appropriate tests.

By contrast, two incompatible polymers will greatly exhibit poor mechanical properties, usually with a diminution of the properties of the polymer which forms the continuous phase in the mixture. Extensive phase separation will often occur during processing, resulting in layering of the polymer or delamination under mild stress or poor surface effects.

Because of the utility of compatibilized blends in a wide variety of uses for thermoplastics, especially the so-called "engineering resins", where the ability to improve certain deficiencies without sacrificing other desirable properties of the matrix or blended components is desired, means have been sought by many workers to improve compatibilization. Although there have been many attempts to predict materials which are compatible or will act as compatibilizers, selecting materials for compatible blends is still a matter of experimentation. Both low-molecular weight additives and polymeric additives have been employed as "compatibilizers".

Compatibilizing polymers may function in several ways :

a) they may be compatible with both components of the blend, even if those components are incompatible with each other ;

b) they may be compatible with one component and reactive with the other component.

c) they may be reactive with both components.

Similar interactions may be combined for compatibilizers which are useful for terpolymer blends.

It is known that glutarimide polymers, which have a preponderance of units of the structure

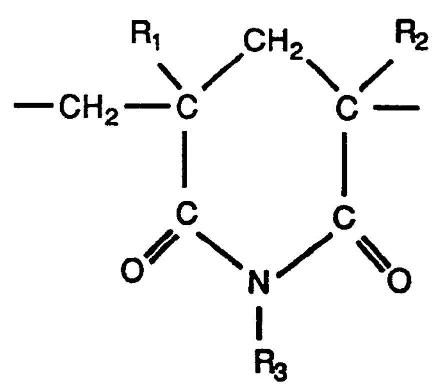

where $R_1$=$R_2$=methyl and $R_3$ is hydrogen or lower alkyl are miscible with a wide range of polar polymers, such as poly(vinyl chloride), aliphatic polyamides, and styrene-acrylonitrile copolymers.

It is further known that glutarimide polymers which have been treated with acid-reducing agents partially or essentially fully to remove acid and/or anhydride groups remaining after the imidization step are generally somewhat more compatible with polar polymers than the non-acid-reduced glutarimides ; however, with polyamides, the reverse appears to be the case. It has recently been shown that the result with polyamides is due to graft copolymers being formed by reaction of the amine terminal group of the polyamide with the remaining acid and/or anhydride group of the glutarimide. It has further been shown that improvements in compatibility between the polyamide and the polyglutarimide occur when the level of such grafting is improved by means of a basic catalyst.

The broad utility of glutarimides, especially those with free acid and/or anhydride groups, in compatibilizing two or more matrix polymers, especially those which are incompatible with each other, has not previously been specifically demonstrated, nor has the application of the "reactive" compatibilizer concept been taught or exemplified for such ternary and quatemary blends.

We have now found certain compositions which are blends of at least three polymers, one component being at least one polyglutarimide which is compatible or miscible with each of the at least two other components, the resulting composition exhibiting improved properties over the mixture of the at least two polymers absent the polyglutarimide.

Of interest in the invention are such compositions where the at least two other components or matrix polymers are not compatible with each other. Also of interest are such compositions where the polyglutarimide further contains residual acid or anhydride groups, and to such compositions where such residual acid or anhydride groups may react with functional groups, especially terminal functional groups, on at least one of the matrix polymers. We have also found processes for preparing any of the above blends, including catalysis of the reaction between acid or anhydride with terminal functional groups.

According to this invention there is provided a compatible polymeric blend comprising : (a) polyglutarimide (b) first matrix polymer compatible with the polyglutarimide and (c) second matrix polymer compatible with the polyglutarimide with the proviso that a compatible polymeric blend comprising :

a) polyglutarimide containing units of the structure

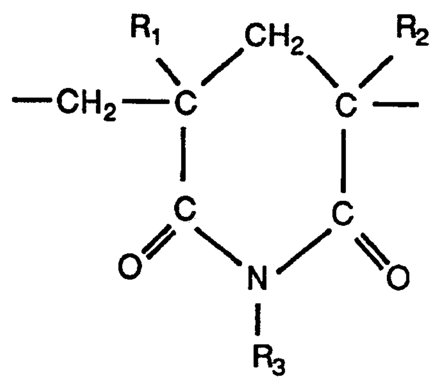

wherein $R_1$ and $R_2$ are individually H or C1-C20 alkyl, and $R_3$ may be H, alkyl,cycloalkyl, aryl, alkaryl, or aralkyl, substituted alkyl, substituted cycloalkyl, substituted aryl, substituted alkaryl, substituted aralkyl, heterocyclic, or substituted heterocyclic ;

b) first matrix polymer compatible with the polyglutarimide ;

c) second matrix polymer compatible with the polyglutarimide and, optionally, incompatible with the first matrix polymer ;

with the proviso that neither of the matrix polymers contains units formally derived from vinyl alcohol, and with the further proviso that if one matrix polymer is an aromatic polycarbonate, the other matrix polymer cannot be a polymer containing units of styrene and of acrylonitrile.

By "polyglutarimide" we mean polymer containing at least 10 weight percent, and preferably at least 40 weight percent to about 100 weight percent, of units of the structure :

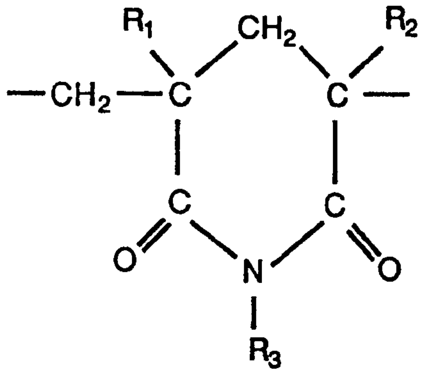

wherein $R_1$ and $R_2$ are individually H or C1-C20 alkyl, and $R_3$ may be H, alkyl,cycloalkyl, aryl, alkaryl, or aralkyl, substituted alkyl, substituted cycloalkyl, substituted aryl, substituted alkaryl, substituted aralkyl, heterocyclic, or substituted heterocyclic. Thus, $R_3$ may be H, straight or like, substituted alkyl, preferably $C_1$ to about $C_{20}$, substituted by such groups as halo or trifluoroalkyl, (preferably trifluoromethyl), (di)alkylamino such as for example 4-chloroalkyl, 2-dimethylaminoethyl, and the like, cycloalkyl, preferably $C_4$ to $C_7$ cycloalkyl, optionally substituted with, for example, alkyl, such as cyclohexyl, and 4-methylcyclopentyl and the like, aryl optionally substituted with, for example, halo, such as phenyl, 4-chlorophenyl, 2-naphthyl, and the like, aralkyl, such as benzyl, phenethyl, and the like, alkaryl, such as 2-methylphenyl, and the like, or heterocyclic, such as tetrahydrofurfuryl, N-methyl-4-piperidinyl, and the like. Other suitable heterocyclic groups include oxetanyl, furanyl, morpholinyl, thiophenyl and thiazolinyl. Other candidate substituted alkyl or aryl groups are alkyl or aryl sulphides or sulphones ($RSO_2NH$-) and R-O-CO- and RCO- (where R is alkyl or aryl). These are also candidates as substitutents on the alkyl or aryl groups, as also is RCOO-.

For blending with polar polymers, it is preferred to employ polyglutarimides wherein R, and $R^2$ are individually H or $CH_3$ and $R^3$ is H or lower alkyl ($C_1$ to $C_4$ carbon atoms), but for blending with less polar polymers, such as polyolefins, it is preferred to employ polyglutarimides wherein $R_3$ is a higher alkyl group, such as one containing 10 to 20 carbon atoms. The polymer or polymers which contain glutarimide units may be totally imidized, that is, having a very low content of units derived from any group other than the imide group. Units derived from other monomers may also be present. Preferably, the weight percent of imide units will be from about 10 to about 100%, with from about 40% to about 100% being preferred. The higher the imide content, the greater will be the effect on properties such as modulus and heat distortion of the compatibilized blend.

Other units in the imide polymer may be those of methacrylate esters, such as alkyl, aryl, alkaryl, aralkyl, cycloalkyl, and heterocyclic esters and such as alkyl, aryl, alkaryl, aralkyl, cycloalkyl, and heterocyclic esters and substituted alkyl, aryl, alkaryl, aralkyl, cycloalkyl, and heterocyclic esters. Preferred are units from methyl methacrylate.

Units may also be present of monomers such as acrylic esters, such as ethyl acrylate, methyl acrylate, butyl acrylate, and the like, unsaturated anhydrides, such as maleic anhydride, itaconic anhydride, and the like, from unsaturated acids, such as methacrylic acid, acrylic acid, acryloxypropionic acid, and the like, from other anhydrides or acids, such as units of methacrylic anhydride or methacrylic acid formed during the imide preparation, from unsaturated amides, such as methacrylamide, and the like. Other monomers may be present, such as vinyl aromatic monomers, such as styrene, alpha-methylstyrene, and the like, acrylonitrile, vinyl esters, and the like. Monomers incapable of participating in the imidization reaction should not be present in the original precursor to be imidized in amounts which would substantially prevent cyclization or imide formation. Thus a copolymer high in styrene, such as above 75%, and relatively low in methyl methacrylate units, such as below about 25%, will form very few imide units on imidization and will not be useful in the present invention.

The molecular weight (Mw or weight-average) of the polyglutarimide may be from about 10,000 upwards. The lower limit is desired to obtain chain entanglements when blended with polar polymers or to achieve the maximum glass temperature enhancement. An upper limit of about 500,000 is preferred. At higher levels, polymer flow may be affected, and it is difficult effectively to achieve compatibility with the matrix polymers. Especially preferred is a molecular weight of from about 70,000 to about 100,000 (weight-average). Nevertheless, certain advantageous compositions may be obtained outside these preferred molecular weight ranges.

Although the full compositional range of ternary and quaternary and higher order combinations blends is contemplated in this invention, the most effective use of the polyglutarimide as a compatibilizing agent is at relatively low use levels ; preferred is from about 1 weight percent of the blend with the matrix polymers to about 30 weight percent. Below that amount, an effect may not be noted in the properties of the blend, while above that level, the cost of the polyglutarimide additive may be excessive for the results achieved. However, in certain

blends where higher heat distortion temperature is a desired property, larger quantities of polyglutarimide, such as 50 weight percent or above, may be present in the blend.

The polyglutarimides useful in the present invention may be prepared by a variety of ways known to the art. Thus polymers mainly of methacrylic acid may be treated in aqueous systems with primary amines or ammonia or urea or substituted ureas, polymers of methacrylamide may be heated with appropriate amines, polymers mainly of alkyl methacrylate units may be treated with ammonia or an amine in aqueous suspension or in an organic solvent, or polymers having cyclic methacrylic anhydride units may be treated with ammonia or an appropriate primary amine. Preferred is the method of Kopchik, U.S.-A- 4,246,374, wherein a polymer containing methacrylic ester units is treated with ammonia or an amine in a devolatilizing extruder, under conditions where the amine or ammonia react in the melt to form the imide, and excess amine and by-products of the reaction are removed from the melt under vacuum. Preparation in certain mixed solvents is reported to yield glutarimide polymers of good optical properties.

The method of Kopchik, which allows control of the nature of $R_3$ imide group, followed optionally by the process of reducing or partially reducing the amounts of acid or anhydride groups in the polyglutarimide polymer, allows preparation of polyglutarimides specifically tailored for compatibilization. It further allows control of the number of acid and/or anhydride sites in the polyglutarimide polymer, if such are desired for reactivity with a matrix polymer to improve compatibility. In relation to this invention, by "acid-reduced" we mean to encompass the partial, complete or substantially complete removal of acid and anhydride groups.

There is a variety of matrix polymers useful in the blends compatibilized with the glutarimide polymer. Such matrix polymers may be either the first matrix polymer, the second matrix polymer, or the third matrix polymer. In general the matrix polymer should be polar, which means that functional groups or coupling groups in the polymer chains are present which bear oxygen, nitrogen, or sulfur moieties. It is preferred that these groups be carbonyl, carbonyloxy, hydroxy,carboxylic, or mono- or di-substituted amine. Purely aliphatic or aromatic polymers, such as polyethylene, polypropylene, or polystyrene, which bear no such functionality, are incompatible with many polyglutarimides, and require as a compatibilizing agent either a polyglutarimide bearing a long aliphatic side chain, such as that derived from cetylamine, a glutarimide polymer containing a substantial number of units derived from one or more vinyl aromatic monomers, such as an imidized copolymer of methyl methacrylate 75/ alpha-methylstyrene 25, or a polyglutarimide chemically joined to a polymer compatible with such non-polar polymers. A means for accomplishing same by use of a compatibilizing resin which is a segmented copolymer of an olefin polymer, such as polypropylene, polyethylene, or an ethylene/propylene copolymer with segments of a polymer containing polyglutarimide units, is disclosed in our co-pending Application, filed on the same day as the present application, and claiming priority from USSN 464 803.

Of the polar polymers useful as matrix polymers, there are many known singly to be compatible with polyglutarimides, either by compatibilization between the polymers without reaction, or by compatibilization caused by chemical combination of the matrix polymer with the polyglutarimide. This chemical combination may be caused simply by the time, heat, and shear conditions of the blending operation, especially if conducted in a devolatilized extruder which will remove low molecular-weight by-products and so drive the reaction to high conversion. In other instances, a catalyst may be supplied, which may either cause a coupling reaction to occur, or cause an existing reaction to proceed to higher conversion. Useful catalysts for such coupling reactions may be low levels of strong bases, such as sodium hydroxide.

The chemical or grafting reaction, that is, the reaction which causes the polyglutarimide and the matrix polymer to form a chemical link, may be conducted between the polyglutarimide and any or all of the selected matrix polymers, although usually only one will have the appropriate reactive functionality.

Particularly useful in such coupling reactions are the non-acid-reduced polyglutarimides, which contain acid and/or anhydride groups useful for reaction with e.g., terminal amine groups of polyamides or terminal hydroxyl groups of polyesters.

The present invention encompasses blends where the matrix polymers might be judged to be compatible in the absence of the compatibilizing polyglutarimide, but whose properties are further improved by the presence of the polyglutarimide, which increases the extent of compatibilization, as well as contributing such advantages as higher service temperature, adhesion to glass, and the like.

Particularly useful as matrix components are polyamides, especially aliphatic polyamides such as nylon 6,6 (polyhexamethylene adipamide), nylon 12 (polydodecyllactam), nylon 6 (polycaprolactam), and the like. Especially preferred is polycaprolactam. Another useful matrix polymer class is polyesters, especially aromatic polyesters, such as polyesters of aliphatic glycols and terephthalic or isophthalic acid. Among these are poly(ethylene glycol) terephthalate (PET), poly(1,4-butylene glycol) terephthalate (PBT), cyclohexanedimethanol terephthalate, and copolymers of these glycols and acids.

Another useful matrix polymer class is polycarbonates, by which is meant polymers containing the structure

$$\text{--Ar-O-C(O)-O-}$$

wherein Ar is an aryl group containing two sites of reactivity for bonding to form a carbonate group, i.e., derived from a dihydroxy aromatic such as 1,4-dihydroxybenzene, p,p'-isopropylidene diphenol, p,p'-sulfonyldiphenol, and the like.

Another useful matrix polymer is acrylonitrile-styrene copolymer, either as such or in combination with a butadiene-based elastomer, such as in ABS (acrylonitrile-butadiene-styrene) resins.

Another useful matrix polymer is poly(vinyl chloride), which encompasses homopolymers of vinyl chloride and also copolymers of at least about 80 weight percent vinyl chloride with co-monomers such as vinyl acetate, vinylidene chloride, ethylene, and the like. The polyglutarimides can be used to compatibilize poly(vinyl chloride) with a third polymer to make useful blends. For example, a goal of PVC producers is to produce PVC products with improved resistance to distortion by heat, for uses such as vinyl siding, hot-fill applications, electronic cabinets, and the like. Blends of polyglutarimides with PVC are useful for this purpose, as taught in U. S.-A-4,255,322. For many uses, it is desired to obtain resistance to sag or pressure under relatively low load conditions, such as under the weight of the object alone, such as vinyl siding, or as tested by a low load test, such as a determination of Vicat softening temperature under load at 10 N. Some additives incompatible with PVC, such as certain vinyl aromatic terpolymers, will exhibit good resistance to sag at low load, but the binary blend is usually not optically clear, and distortion temperature at higher loads is not improved as substantially as with the glutarimide.

Thus, a ternary blend containing a polyglutarimide will exhibit an improved balance of heat distortion values, and the system will exhibit improved compatibility by having improved clarity. A typical blend would include poly(vinyl chloride) 100 parts, poly(N-methyldimethylglutarimide 10 - 20 phr (parts per hundred of PVC), and an alpha-methylstyrene/methyl methacrylate/ ethyl acrylate (24/74/2) terpolymer 10 - 20 parts.

Compositions wherein the matrix polymers contain units formally derived from vinyl alcohol, that is, contain

$$--CH_2-CHOH--$$

units related to the non-existent vinyl alcohol are which are obtained by hydrolysis of vinyl acetate homo- or copolymers, are not within the scope of the present invention. Compositions wherein the first matrix polymer is an aromatic polycarbonate, such as bis-phenol A polycarbonate, in combination with second matrix polymer where are either a copolymer of styrene-acrylonitrile, including acrylonitrile- butadiene-styrene (ABS) graft copolymers, are also not within the scope of this invention. Knowledge that such specific ternary compositions exist does not lead to a conclusion that polyglutarimides would be broadly useful as compatibilization improvers over a wider range of potentially blendable matrices.

The ternary and quaternary blends of the present invention may contain impact modifiers to enhance resistance to breakage. Such impact modifiers will be present at from about 5 to about 30 parts per 100 parts of blend, although higher or lower levels may be used. The impact modifiers are generally blended with the other components of the blend and taken through the various processing and forming steps. The impact modifiers may contain appropriate thermal stabilizers, such as phenolic antioxidants, thio compounds, organophosphorous compounds, and the like.

Such impact modifiers include rubbers, such as butadiene-based copolymers, ethylene-propylene and ethylene-propylene-diene rubbery copolymers, acrylic rubbers, such as poly(butyl acrylate), and the like. More commonly, they are core/shell or multi-staged elastomers, often prepared in and isolated from emulsion, wherein the core or first stage is a rubbery polymer of the type described earlier, and the shell or outer stage is a harder polymer compatible with at least one component of the blend. The outer stage may also contain sites for reaction with at least one component of the blend, such as acid or anhydride groups for reaction with the amine terminal group of poly(caprolactam). Such impact modifiers include staged polymers of methyl methacrylate polymers onto poly(butyl acrylate), staged polymers of styrene-acrylonitrile onto a butadiene polymeric first stage, graft copolymers of methyl methacrylate onto a butadiene-styrene copolymer, graft copolymers of styrene-acrylonitrile onto an ethylene-propylene rubber, and the like. The compatibilized blends containing glutarimide polymers may be further modified by the incorporation of glass or other reinforcing fibers, or particulate fillers or reinforcing agents such as talc or other minerals, carbon black, glass spheres, or metallic particles. In general, the polyglutarimide components will exhibit good adhesion to glass and other inorganic fillers. Further modification of properties of these blends can be obtained by incorporating additives such as flame retardants, blowing agents, antioxidants, thermal stabilizers, pigments, flatting agents, lubricants, antistatic agents, conductive materials, toners or UV stabilizers. The components may be mixed all together or th eimide polymer may be pre-compounded with one matrix polymer, followed by compounding of that blend with the remaining components.

The compatibilized blends of nylon polymers with other thermoplastic resins such as styrene/ acrylonitrile, ABS, poly(alkylene terephthalates), and polycarbonate, or ternary combinations of the above will be useful for imparting higher melt viscosity, especially at low shear, for thermoforming and blow-molding uses, as items for automotive uses, such as wheel covers, trim, and covers, power tool housings, business machines and computer housings, bicycle wheels, bowling pins, tennis frames, and other recreational uses, and the like.

Similar uses to the polyamide blends will be seen with blends of polyesters, such as poly(ethylene terephthalate), poly(butylene terephthalate), and the like with other thermoplastics as compatibilized by the imide polymers of the present invention. Improvements in melt strength, flexural modulus, heat distortion temperature, and water resistance should prove useful in packaging applications and blow-molding applications.

The compatibilizing polyglutarimides of this invention, particularly those containing poly(N-methyl)dimethylglutarimide segments, may be blended with combinations of other thermoplastic polymers (as used herein "-" indicates blended polymers, "/" copolymers, and "/ /"" graft or block polymers) such as butadiene/styrene/(meth)acrylic, styrene/(meth)acrylic, and (meth)acrylic multistage polymers ; polyamides, polyamide-multistage polymer blends, ethylene/vinyl acetate, styrene/acrylonitrile, styrene/acrylonitrile-multistage polymer blends,styrene/acrylonitrile-ethylene/propylene/diene rubber blends, alpha-methylstyrene/acrylonitrile, alpha-methylstyrene/styrene/acrylonitrile, alpha-methylstyrene/methyl methacrylate/ethyl acrylate, butadiene/ /acrylonitrile/styrene, polycarbonate, polycarbonate-multistage polymer blends, polybutylene terephthalate, polybutylene terephthalate-polycarbonate blends, polybutylene terephthalate-polycarbonate copolymers, polybutylene terephthalate-multistage polymer blends, polybutylene terephthalate/polytetrahydrofuran, polyvinyl chloride, polyvinyl chloride-multistage polymer blends, polyvinyl chloride-(meth)acrylate blends, chlorinated polyvinyl chloride, acrylonitrile/(meth)acrylate-multistage polymer blends, acrylonitrile/(meth)acrylate/styrene, epichlorohydrin/bisphenol-A copolymers, (often designated "phenoxy" resin), polyethylene terephthalate or other polyalkylene terephthalate, polyethylene terephthalate-glycol modified, polyethylene terephthalate-polycarbonate blends, polycaprolactone, polyarylate, copolyester of bisphenol-A with isophthalic and/or terephthalic acids, poly(meth)acrylates, polyacetal, styrene/maleic anhydride, styrene/maleimide, polyvinylidene fluoride, polyvinylidene fluoride-multistage polymer blends, cellulosics, polyethylene oxide, polyamideimide, polyetherester, polyetheresteramide and polyetheramide, polyphenylene sulfide, polyphenylene oxide, polysulfone, polyphenylene oxide- polystyrene blends, polyphenylene oxide-high impact polystyrene blends, polyvinylidene chloride, polyvinylidene chloride/(meth)acrylonitrile, polyvinylidene chloride/(meth)acrylate, polyvinyl acetate, polyetheretherketone, polyetherimide, thermoplastic polyimides, polyurethanes, and other polymer types. Random or block copolymers which combine the different functionalities can also be used, and quaternary or higher blends can be made from combinations of any of these polymer types with the imide compatibilizers.

The process for compatibilizing involves mixing the matrix polymer, compatibilizing agent, and optionally other components, such as filler, fiber, impact modifier, other additives, catalyst, and the like, and subjecting the mixture to intensive mixing under heat conditions which will lower the melt viscosity of the polymeric components, cause intimate mixing, allow for any coupling reactions to occur, yet not degrade or discolor any of the components, then forming the resulting mixture either into a strand, pellet or the like for further processing, or directly processing the blend in to a useful, film, sheet, or molded object.

Intensive mixers, such as Banbury mixers, Brabenders, and the like, may be used, as may be mill rolls, but admixture in a single- or twin-screw extruder is the preferred process.

Certain additives may be added to the mixture while the molten blend is being processed into pellets, sheet, strands, and the like, but after the more severe blending conditions at the beginning of the blending operation. Such additives may include lubricants, thermal stabilizers, pigment, dyes, and the like.

Blends of matrix polymers compatibilized with the imide polymers of the present invention will be useful in a variety of applications. Combinations can be realized which exhibit toughness, heat resistance, processability such as melt strength, thermoformality, and the like, low moisture absorption, good surface appearance, chemical resistance, barrier properties, creep resistance, flame resistance, and the like ; with suitable additives, weatherable and radiation resistant compounds can be achieved. Processing by extrusion injection molding, sheet or film thermoforming, film or sheet orientation, blow molding, and the like is contemplated.

Uses in automotive, such as car, bus, truck, and motorcycle, applications include instrument panels, deck shelves, interior post surrounds, window surrounds, air vents, visors, wheel covers, spoilers, wheel wells, head rests, protective grills, arm rests, fascia, seatbacks, rocker panels, bumpers, handles, interior and exterior trim, fasteners, body panels, and certain under-the-hood uses, such as fluid containers, distributor caps, valve covers, damping insulation, and the like. Similar uses may be found for such blends in other transportation areas, such as railroad cars and airplanes, such as in seating, seat surrounds, lavatory facilities, luggage compartments and bins, tray tables, and the like.

Non-automotive applications may include construction uses, such as windows, doors, window and door frames, siding, pipe, gutters, downspouts, air conditioning ducts, traps, weatherstripping, gaskets, fencing, replacement for wooden railroad ties, plastic bricks, concrete filler, hardware fixtures such as cabinet hinges, axles, lock mechanisms, electrical outlet plates and childproof safety plugs, lavatory and bath units, cabinets, and the like ; business machines, such as computer housings, keyboards, TV cabinets, and the like ; appliances, such

as refrigerator shells and door liners, washer panels, portable appliance housings, electrical insulation, power tool housings, such as for drills, sanders, saws, and the like ; electronic and electrical uses, such as circuitboard assembly, lamps, support for computer components, housings for stereo units, and the like ; musical instrument housings, piano keys, guitar picks, and the like ; consumer products, such as trash disposal containers, camera, portable tape recorder, and VCR housings, housings for lawnmowers and snowblowers, lawn edgings, washing machine tubs, attache cases, suitcases, shades, pump components, modular furniture, baskets, bowls, pots and containers for plants, open-structured containers, and the like.

Certain of these blends will be clear or will transmit light readily, and may have additional uses such as glazing, drinking containers, high intensity light fixtures, lenses, laboratory ware, translucent or transparent medical ware, translucent or transparent food packaging, and the like.

Non-woven fabrics may be formed which may be useful as clothing, sheets, bandages, carpet backing, doll hair, webbing, cigarette filters, strapping, rope, twine, bristles, rugs, and the like.

Toys or recreational objects, such as small molded dolls, toy automobiles, and the like, tricycle components, bicycle components, interlocking building pieces, novelty items, encapsulated magnets, surfboards, boat decks, swimming pool floats, swimming pool liners, frisbees, snow sliding toys, ski equipment, gameboards, and the like, may be prepared by conventional processing techniques.

The blends of the present invention may be useful in food applications, such as containers for food and drink, films for food packaging, such as coextruded film with barrier properties, as bags and other carriers, as freezable, ovenable, or microwaveable trays, microwaveable cookware, and the like. Films of the blends may be monoaxially or biaxially oriented to improve properties.

The invention will now be illustrated by the following Examples in which all parts and percentages are by weight unless otherwise indicated.

Example 1

This example illustrates the improvement in impact strength achieved when low levels of a polyglutarimide are added to a blend of polycaprolactam and an ABS plastic.

A poly(caprolactam) of number-average molecular weight 25,000 was dried for 12 hours at 85°C under vacuum prior to blending ; it is designated PCL. Poly(N-methyl)dimethylglutarimide (57 weight percent cyclic imide units, 1.83 weight percent of copolymerized methacrylic acid units, and molecular weight of 90,000) was prepared by the method of Kopchik from poly(methyl methacrylate) and monomethylamine and designated PGI-1. A styrene-acrylonitrile graft copolymer containing 70 weight percent of a gel phase and 30 weight percent of a rigid phase, with a rigid phase of a styrene-acrylonitrile copolymer containing 22.5 weight percent acrylonitrile of weight-average molecular weight 167,000, and a gel phase being a graft copolymer of a styrene-acrylonitrile copolymer onto polybutadiene with a 50% rubbery phase and containing 46 weight percent butadiene. It was dried for 12 hours at 75°C before mixing and is designated ABS-A. In this experiment, the weight fraction of PCL was held constant at 60%, with PGI-1 replacing a portion of the ABS-1. Blends were melt-mixed in a Killion single screw extruder of 25.4 mm. diameter with a high shear screw, compression ratio 3 / 1. The pellets so formed were re-extruded to assure uniformity. Tensile and impact test bars were injection molded on an Arburg All-rounder 305-210-700 screw injection molding machine ; screw speed 260 rpm, injection pressure 100 bars, holding pressure 50 bars, injection pressure 5 seconds, holding time 2 seconds, cooling time 45 seconds, cooling water temperature 70°C, barrel temperature 240 - 260°C. Notched Izod impact was measured by ASTM D256 on 3.18 mm. bars at room temperature. Break strain was measured on an Instron Model 1137 tensile tester.

Table I - Effect of Polyglutarimide on Impact and Break Strain of Polycaprolactam// ABS Blend

| Example No. | Blend* PCL | ABS | PGI | Notched Izod, Impact kg-cm/cm. | Break Strain,% |
|---|---|---|---|---|---|
| 1-a | 60 | 40 | 0 | 7.6 | 40 |
| 1-b | 60 | 38 | 2 | 18.0 | 105 |
| 1-c | 60 | 36 | 4 | 17.4 | 180 |
| 1-d | 60 | 34 | 6 | 16.3 | --- |
| 1-e | 60 | 33 | 8 | 16.3 | 165 |

* Weight percentage of composition

Example 2

This example illustrates the sources of the polymers used in the blend studies. In most cases, the polymers were commercially obtained, and the extent and type of stabilizers are unknown. Most materials are believed to be homopolymers. Densities and melt flow rates or intrinsic viscosities are given where known ; the materials are generally those used for plastics molding uses.

The ABS-2 is believed similar, although not identical, to that in Example 1, that is, a graft of a styrene/acrylonitrile 79/21 copolymer onto a polybutadiene rubber. The modified acrylic is a commercial blend, designed for clear applications, of a commercial methyl methacrylate/ethyl acrylate copolymer modified with a core/shell modifier of a butyl acrylate/styrene copolymer onto which is grafted methyl methacrylate.

The cyclohexyl methacrylate copolymer was prepared by polymerizing a degassed mixture of the two monomers contained in a poly(vinyl alcohol) bag with ca. 0.5 weight percent n-=dodecyl mercaptan and a free radical initiator at 80°C overnight, followed by heating at 120°C for four hours. The bag was removed and the polymer granulated.

Table 2 - Polymeric Materials Blended

| Name | Approximate Composition | Manufacturer | Abbreviation | Selected Properties |
|---|---|---|---|---|
| Tyril 1000 | S/AN - 75/25 | Dow | SAN | d=1.08 g/cm$^3$; Melt flow=0.75 g/min |
| Carodel | Polyethyleneterephthalate 3% isophthalic acid | ICI | PET | d=1.05 g/cm$^3$; Intrinsic $\eta$=0.85 |
| Merlon M50 | Polycarbonate | Mobay | PC | d=1.20 g/cm$^3$; Melt Flow=0.6 g/min (O) |
| Valox 310 | Polybutylene terephthalate | General Electric | PBT | d=1.48 g/cm$^3$ |
| Lustran | S/AN-butadiene, 21% AN | Monsanto | ABS-2 | d=1.04 g/cm$^3$; Melt Flow=0.17 g/min (I) |
| Capron | Polycaprolactam | Allied | PCL | MW=20,000-30,000; [$NH_2$]=50 meq/kg' d=1.13 g/cm$^3$ |
| Himont | Polypropylene | Himont | PP | Melt Flow=0.4 g/min |
| Petrothene LR734 | Polyethylene | USI | LDPE | d=0.954 g/cm$^3$ Melt Flow=0.38 g/min |
| Plexiglas DR | Modified acrylic | Rohm and Haas | PMMA | Melt Flow = .1g/min d=1.15 g/cm$^3$ |
| Styron 666 APR | Polystyrene | Dow | PS | Melt Flow=.91 g/min d=1.04 g/cm$^3$ |
| Cyclohexyl-methacrylate-co-methylmethacrylate | 20% Cyclohexylmethacrylate | Rohm and Haas | CHMA | NA |
| Kynar 740 | Polyvinylidenefluoride | Pennwalt | PVDF | d=1.78 g/cm$^3$ MW=45,000 |

Example 3

The following describes the polyglutarimides used in the present study. All were made by the process of Kopchik. The starting methacrylic polymer was fed to a 20.3 mm. tangential counter-rotating twin screw extruder equipped with means for plasticizing and melting the polymer, for adding ammonia or an amine under pressure, an in-line means (which zone was used only as a conveying zone in some experiments where acid-reduction was not requested) for adding alkylating agent, means for devolatilization or residual amine, (optionally) excess alkylating agent, and reaction products, and for removal of the molten polymer as a strand. The system is substantially as described in Examples 21-27 of U.S. Patent 4,727,117, incorporated herein by reference.

Sample PI9 was prepared from an alpha-methylstyrene/methyl methacrylate/ethyl acrylate 24/76/2 terpolymer of MW ca. 110,000. Samples PI-2, 3, 6, 7, 8, 10 and 11 were prepared from a poly(methyl methacrylate) homopolymer of MW (weight average) 150,000. The other PI samples were made from a similar polymer of MW 90,000. Sample PI-11 was made in diphenyl solution with cetylamine. Samples PI-7 and PI-8 were made with ammonia rather than methylamine. Sample PI-6 was totally acid-reduced with dimethylcarbonate ; sample PI-7 was reduced to ca. 50% of the original acid value.

Table 3 - Polyimides Additives

| Example | %N | % Total Acid | % Free Acid | % Anhydride | Vicat (°C) |
|---|---|---|---|---|---|
| PI2 | 6.5 | 4.5 | 2.9 | 1.6 | 151 |
| PI3 | 4.8 | 2.79 | 1.83 | 0.96 | 144 |
| PI4 | 4.87 | 2.66 | 1.99 | 0.67 | 142 |
| PI5 | 4.87 | 2.21 | 1.73 | 0.67 | 142.5 |
| PI6 | 6.20 | 0.41 | 0.07 (a) | 0.34 | 140 |
| PI7 (b) | 2.3 | N | N | N | 144 |
| PI8 (b) | 4.5 | N | N | N | 170 |
| PI9 | 3.1 | 5.1 | 4.1 | 1.0 | 154 |
| PI10 (c) | N | | ~10-20 | | 188 |
| PI11 (d) | 0.24 | 3.3 | 0.7 | 2.6 | 45 |
| PI12 | 4.9 | 3.1 | 2.0 | 0.9 | * |
| PI13 | 7.6 | 6.7 | 5.9 | 0.8 | 171 |

* Analysis pending

(a) treated with dimethyl carbonate

(b) prepared with ammonia as imidizing agent

(c) prepared with cyclohexylamine as imidizing agent

(d) prepared with cetylamine as imidizing agent

N = data not available

Examples 4-11

These examples illustrate blends of polycaprolactam, alternately called nylon-6, with a second thermoplastic compatibilized with an imide polymer. Unless otherwise indicated, the binary blends of nylon 6 (PCL) with a second thermoplastic were compatibilized by introducing pellets of imidized acrylic to the pellet mixture and extruding the resulting ternary mixture on a single-screw, 25.4 mm. Killion extruder (L/D=30) at a constant temperature. (The configuration of the extruder barrel consisted of one gravity feed zone, two reaction zones, and two die zones). Following the reaction zones, a short vacuum zone was present, so as to pull off any volatile

by-products of the extrusion. After the extruder reached thermal equilibrium, it was purged with acrylic molding powder and the pellet mixture of the control experiment (containing no imide material) was then gravity-fed to the feed throat and allowed to purge for 2-3 minutes. Material was then extruded at a screw speed of 100 RPM under vacuum (approximately 633 mm Hg), and the extrudate strand cooled in a 1.2 meters long water bath before being pelletized. The temperatures used in the reaction zones of the extruder were between 200° -286° C, while feed and die zones were in the 200° -235° C range.

Samples for mechanical testing (ASTM cluster) were injection molded on a Newbury Injection Molding machine at barrel temperatures of 218°- 222° C using a screw speed of at least 400 RPM. Injection pressure was held at 2070 kPa with a back pressure of 690 kPa. Mold temperatures are in the 90-95° C range. Total cycle time was 45 seconds with a 15 second forward injection time using a shot size of approximately 50 g. The resulting microtensile, Izod, and Dynatup samples were conditioned by ASTM standards at 50% relative humidity for 24 h before tensile and impact data are gathered.

Example 4 demonstrates significant improvement in the tensile properties of elongation to break and yield stress as the weight % of imide in 3/2 blends of nylon 6/SAN was increased, while the modulus of these materials remained relatively independent of composition. Impact tests indicated that these materials are strengthened by addition of the PI3 imide. Unnotched Izod values were enhanced 839% over the control experiment when 10% by weight of PI3 is added. Similar enhancements were noted for notched Izod values. The load to break obtained via Dynatup increased linearly with increasing imide content. In addition, the appearance of the extruded strand was greatly enhanced upon addition of PI3. The uncompatibilized blend showed very low melt strength, high surface roughness, and considerable die swell. Upon addition of PI3, die swell disappeared, melt strength increased, and the surface of the cooled strand was smooth and glossy. With partically acid-reduced polyglutarimide (PI12) improved elongation was observed.

Example 5 demonstrates significant improvement in the properties of 1/1 blends of nylon 6/polypropylene with addition of 10% PI10. Yield stress, modulus, unnotched Izod, and DTUFL were all enhanced while elongation to break was decreased. Surprisingly, the methylimide of Ex. 3 exhibited somewhat similar behavior, although considered incompatible with polypropylene.

Example 6 demonstrates the enhancement of the thermomechanical and mechanical properties of 9/1 Nylon 6/ABS mixtures upon the addition of 20%
(by weight) imide PI3. Although elongation at break was decreased in the imide-containing sample, yield stress, modulus, unnotched Izod, load at break, and DTUFL at 1.82 MPa were all increased significantly. Similar results were obtained with notched Izod values.

Example 7 demonstrates the enhancement of mechanical and thermomechanical properties of 1/1 blends of nylon 6/PBT upon the addition of imides PI3, PI2 or PI13. Enhancements of elongation to break range from 400% in the case of 5% PI2 to 887% in the case of 5% PI13 were seen. Yield stress was increased by the addition of each imide and was invariant with composition and/or imide type, while modulus was nearly constant across the range of composition and imide type. Unnotched Izod was increased significantly upon the addition of each imide ; similar enhancements were noted for notched Izod values.
DTUFL at 1.82 MPa increased at every imide-containing composition, with a maximum increase of 43 ° C at 20% PI13.

Toughened blends were observed upon addition of EXL-3330 or KM-330, commercial impact modifiers for PVC and engineering resins based on a high acrylate core and a poly(methyl methacrylate) shell. Toughening was not as pronounced with KM-653, a MBS modifier sold commercially for use in polyester modification.

Example 8 demonstrates blends of polycarbonate and nylon. EXL-3386 is a core/shell butyl acrylate/methyl methacrylate impact modifier with acid copolymerized into the outer stage, as described in European Patent Application 259,097.

It is noted in several cases that better impact was seen for the blends compatibilized with polyglutarimide than with the binary blends plus impact modifier. Further, the all-acrylic impact modifier plus the imide compatibilizer were shown to be very effective in toughening the blend.

Example 9 demonstrates effectiveness of PI2, but surprisingly not PI13, a more highly imidized sample, in compatibilizing PCL and poly(ethylene terephthalate).

Examples 10 and 11 shows improvement only for strand uniformity and DTUFL, with little effect on other properties. It is thought even the imidized PI9 with 24% alpha-methylstyrene groups may not be compatible with the polystyrene matrix polymer.

Examples 11 and 12 demonstrate improved compatibilization for a methacrylic homopolymer (impact-modified) and a copolymer (no impact modifier) with selected polyglutarimides.

Examples 13-15

These examples further illustrate ternary blends containing polycaprolactam as one matrix polymer and with glutarimide polymers as compatibilizing agents. In Example 13, the impact strength of polycaprolactam - poly(vinylidene fluoride) blends is increased. In Example 14 the impact strength of nylon-polyacetal 1 :1 blends is increased by blending with certain polyglutarimides, although blending with a highly imidized non-acid-reduced sample shows deleterious effects on impact, but the heat distortion temperature is raised.

In Example 15, a compatible blend of polycaprolactam and a phenoxy resin exhibit improved toughness and heat distortion temperature when a glutarimide polymer is present.

Examples 16-20

These examples demonstrate improved compatibilization among three matrix polymers when a polyglutarimide is present. In all these examples, polycaprolactam is one of the matrix polymers.

Unless otherwise indicated, all ternary blends of Nylon 6 (PCL) with second and third thermoplastic components were compatibilized by the addition of pellets of imidized acrylic (20% by weight) to the pellet mixture and extruding the resulting quaternary mixture on a single-screw, 1" Killion extruder (L/D=30) at a constant temperature. The configuration of the extruder barrel, purging of the reaction zones, and extruded strand cooling and pelletizing were identical to those of Examples 4-11. The temperatures used in the reaction zones of the extruder were between 200° -271° C, while feed and die zones were kept in the 200° -235° C range.

Samples for mechanical testing (ASTM cluster) were injection molded on a Newbury Injection Molding machine under the same conditions in Examples 4-11. The resulting microtensile, Izod, and Dynatup samples were conditioned by ASTM standards at 50% relative humidity for 24 h before tensile and impact data were gathered.

Example 16 demonstrates the enhancement of the mechanical and thermomechanical properties of a 3/2/3 blend of Nylon 6/SAN/PC upon the addition of 20% (by weight) of polyimide PI2. Tensile properties showed a 206% increase in elongation to break and a 1150% increase in modulus. A nearly five-fold increase in impact resistance was measured by unnotched Izod. Similar results were obtained in notched Izod experiments. Load at break was increased 350%, while distortion temperature at 1.82 MPa was increased over 30° C. In addition, the strands extruded under the above conditions in the absence of T-142 exhibited poor melt strength, high die swelling, and a very rough surface when cooled. Addition of the imide improved all of these properties.

Examples 17 and 18 demonstrate enhancement of DTUFL with maintenance of other properties for ternary blends with PCL, ABS and PBT (polybutylene terephthalate).

Examples 19 and 20 demonstrate improvements in all properties, especially for distortion temperature for modified ternary blends of nylon 6, ABS, and polycarbonate in two different ratios.

TABLE 4-Properties of Multicomponent Polymer Blends Containing Nylon as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 4. Nylon 6/SAN (3/2) | | | | | | | |
| | wt. % imides | | | | | | |
| a | 0 | 45 | 47.6 | 1959 | 100.0 | 66.7 | 92.4 |
| b | PI3, 1% | 68 | 51.8 | 2014 | 407.0 | 74.1 | 89.1 |
| c | PI3, 2% | 69 | 51.0 | 1917 | 550.0 | 68.5 | 89.5 |
| d | PI3, 4% | 93 | 50.0 | 1897 | 669.4 | 75.7 | 86.8 |
| e | PI3, 6% | 96 | 50.5 | 1883 | 348.2 | 82.8 | 90.9 |
| f | PI3, 10% | >100 | 51.8 | 1959 | 839.0 | 100.0 | 90.4 |
| g | PI12, 1% | 10 | 65.4 | 2234 | 567.1 | 62.7 | 89.0 |
| h | PI12, 2% | 144 | 66.3 | 2324 | 663.6 | 62.7 | 89.0 |
| i | PI12, 4% | 267 | 66.7 | 2255 | 657.7 | 66.3 | 88.6 |
| j | PI12, 6% | 267 | 67.7 | 2248 | 720.8 | 60.7 | 91.9 |
| k | PI12, 10% | 246 | 69.4 | 2369 | 454.2 | 59.6 | 91.9 |
| l | PI6, 10% | 3 | 0 | 2455 | 230.6 | 91.8 | 89.5 |

**TABLE 4-Properties of Multicomponent Polymer Blends Containing Nylon as a Component and an Imidized Acrylic as a Compatibiliser**

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 5. Nylon 6/Polypropylene (1/1) | | | | | | | |
| | wt. % imides | | | | | | |
| a | 0 | 13 | 24.5 | 1421 | 200.3 | 51.9 | 53.5 |
| b | PI10, 10% | 8 | 35.6 | 1662 | 230.0 | 51.7 | 62.9 |
| c | PI13, 20% | 7.3 | 39.6 | 1945 | 226.8 | 40.0 | 84.3 |
| - Blend - | | | | | | | |
| 6. Nylon 6/ABS (9/1) | | | | | | | |
| | wt. % imides | | | | | | |
| a | 0 | 326 | 41.0 | 1628 | 1346.0 | 181.6 | 60.4 |
| b | PI3, 20% | 302 | 43.7 | 1814 | 2740.7 | 518.9 | 89.0 |

TABLE 4-Properties of Multicomponent Polymer Blends Containing Nylon as a Component and an Imidized Acrylic as a Compatibiliser

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 7. Nylon 6/PBT (1/1) | | | | | | | |
| | wt. % imides | | | | | | |
| a | 0 | 3 | 0 | 2007 | 411.3 | 375.0 | 58.4 |
| b | PI3, 5% | 123 | 54.4 | 2138 | 1168.6 | 322.4 | 68.4 |
| c | PI2, 5% | 120 | 54.0 | 2076 | 1558.3 | 358.3 | 67.0 |
| d | PI13, 5% | 266 | 54.3 | 2117 | 1227.2 | 555.4 | 62.0 |
| e | PI2, 20% | 187 | 57.2 | 2269 | 695.9 | 518.7 | 99.2 |
| f | PI13, 20% | 181 | 56.8 | 2248 | 726.1 | 518.1 | 101.1 |
| g | PI2, 8% EXL 3330, 15% | 174 | 41.1 | 1827 | 892.0 | 255.0 | 70.0 |
| h | PI2, 8% 15% KM 330 | 152 | 44.0 | 1834 | 2067 (hinged) | 389.0 | 68.1 |
| h | PI2, 8% 15% KM 653 | 154 | 44.0 | 1958 | 1083 | 361.0 | 61.1 |

**TABLE 4-Properties of Multicomponent Polymer Blends Containing Nylon as a Component and an Imidized Acrylic as a Compatibilizer**

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 8. Nylon 6/PC (1/1) | | | | | | | |
| | wt. % imides | | | | | | |
| a | 0 | 74 | 53.5 | 2145 | 11.7 (notched) | 46.3 | 104.1 |
| b | PI2, 1% | 149 | 52.0 | 1862 | 14.3 (notched) | 43.1 | 110.0 |
| c | PI2, 10% | 147 | 54.6 | 2014 | 60.4 (notched) | 214.4 | 120.0 |
| d | PI2, 20% | 132 | 57.9 | 2228 | 10.6 (notched) | 42.1 | 116.3 |
| e | PI2, 16.7% | 129 | 48.8 | 1931 | 165.4 (notched) | 448.1 | 119.5 |
| | KM 330, 16.7% | | | | | | |
| f | PI2, 16.7% | 128 | 48.3 | 1917 | 145.2 (notched) | 449.2 | 119.7 |
| | EXL 3330, 16.7% | | | | | | |
| g | KM-330 | 124 | 42.1 | 1634 | 78.5 (notched) | 285.7 | 107.3 |
| h | PI2, 16.7% | 123 | 46.1 | 1869 | 420.3 (notched) | 386.0 | 109.6 |
| | KM653, 16.7% | | | | | | |
| i | PI2, 16.7% | 125 | 47.2 | 2007 | 117.7 | | |
| | EXL-3386, 16.7% | | | | | | |
| j | EXL-3386, 20% | 118 | 33.7 | 1538 | 54.6 (notched) | | |
| k | PI12, 10% | 151 | 59.5 | 2483 | | 68.9 | 109.6 |
| l | PI12, 20% | 137 | 64.1 | 2607 | | 65.6 | 112.2 |

TABLE 4-Properties of Multicomponent Polymer Blends Containing Nylon as a Component and an Imidised Acrylic as a Compatibiliser

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 9. Nylon 6/PET (1/1) | | | | | | | |
| | wt. % imides | | | | | | |
| a | 0 | 3 | 0 | 2297 | 93.5 | 32.7 | 73.1 |
| b | PI2, 5% | 138 | 60.3 | 2372 | 284.1 | 32.7 | 73.4 |
| c | PI2, 10% | 158 | 59.2 | 2593 | 324.7 | 75.6 | 73.5 |
| d | PI13, 5% | 3 | 0 | 2110 | 225.9 | 61.2 | 72.6 |
| e | PI13, 10% | 2 | 0 | 2441 | 122.8 | 61.2 | 71.6 |
| - Blend - | | | | | | | |
| 10. Nylon 6/PS (1/1) | | | | | | | |
| | wt. % imides | | | | | | |
| a | 0 | 3.34 | 0 | 2338 | 371 | 57.5 | 85 |
| b | PI9, 10% | 3.26 | 0 | 2565 | 230 | 59.0 | 91 |
| c | PI2, 10% | 3.90 | 0 | 2469 | 254 | 44.0 | 90 |

TABLE 4-Properties of Multicomponent Polymer Blends Containing Nylon as a Component and an Imidised Acrylic as a Compatibiliser

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 11. Nylon 6/PMMA (1/1) | | | | | | | |
| | wt. % imides | | | | | | |
| a | 0 | 37 | 41.4 | 1483 | 37.6 (notched) | 52.1 | 74 |
| b | PI8, 20% | 138 | 53.0 | 2034 | 63.7 (notched) | 232.6 | 90 |
| c | PI12, 20% | 47 | 53.0 | 1910 | 42.9 (notched) | 74.1 | 93 |
| - Blend - | | | | | | | |
| 12. Nylon6/CHMA (7/3) | | | | | | | |
| | wt. % imides | | | | | | |
| a | 0 | 184.3 | 38.0 | 1745 | 238.5 | 86.1 | 90.1 |
| b | PI10, 5% | 53.5 | 56.8 | 2041 | 240.0 | N | N |
| c | PI4, 5% | 130.6 | 54.7 | 1683 | 667.8 | 85.7 | 89.6 |

TABLE 4-Properties of Multicomponent Polymer Blends Containing Nylon as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 13. Nylon6/PVDF (3/2) | | | | | | | |
| | wt. % imides | | | | | | |
| a. | 0 | 266 | 51 | 2048 | 359.3 | 370 | 59 |
| b | PI3. 10% | 282 | 55 | 2337 | 1234.I (hinged) | 273 | 59 |
| c | PI3, 20% | 341 | 50 | 2055 | 1587.8 | 523 | 50 |
| d | PI12, 20% | 333 | 52 | 2255 | 982.6 | 129 | 57 |
| - Blend - | | | | | | | |
| 14. Nylon6/Polyacetal (1/1) | | | | | | | |
| | wt. % imides | | | | | | |
| a | 0 | 160.3 | 41.9 | 2021 | 710.2 | 61.6 | 72.8 |
| b | PI13, 10% | 127.5 | 45.2 | 2179 | 437.6 | 7.2 | 106.3 |
| c | PI2, 10% | 159.2 | 48.3 | 2352 | 1869 (80% ductile) 950.5 (20% brittle) | 64.7 | 107.6 |
| d | PI12, 10% | 182.9 | 51.6 | 2400 | 1858 (80% ductile) 950.5 (20% brittle) | 70.1 | 93.5 |

TABLE 4-Properties of Multicomponent Polymer Blends Containing Nylon as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 15. Nylon6/Phenoxy(1/1) | | | | | | | |
| | wt. % imides | | | | | | |
| a. | 0 | 147.1 | 59.2 | 2407 | 2346 (80% ductile) 1062.7 (20% brittle) | 403.6 | 70.2 |
| b. | PI2, 10% | 200 | 64 | 2670 | 3449 (80% ductile) 350.8 (20% brittle) | 107 | 80 |
| - Blend - | | | | | | | |
| 16. Nylon6/SAN/PC (3/2/3) | | | | | | | |
| | wt. % imides | | | | | | |
| a | 0 | 18 | 0 | 233 | 90.6 | 204.7 | 73.1 |
| b | PI2, 20% | 127 | 70.2 | 2690 | 480.4 | 704.0 | 104.7 |
| - Blend - | | | | | | | |
| 17. Nylon6/SAN/PBT (3/2/3) | | | | | | | |
| | wt. % imides | | | | | | |
| a | 0 | 2.9 | 0 | 2428 | 65 | 65.0 | 88.0 |
| b | PI4, 20% | 4.1 | 0 | 2697 | 357 | 69.0 | 99.0 |

TABLE 4-Properties of Multicomponent Polymer Blends Containing Nylon as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 18. Nylon6/ABS/PBT (9/1/9) | | | | | | | |
| | wt. % imides | | | | | | |
| a | 0 | 2.9 | 0 | 2021 | 496 | 63.0 | 71.1 |
| b | PI4, 20% | 6.8 | 62.1 | 2214 | 592 | 56.0 | 99.0 |
| - Blend - | | | | | | | |
| 19. Nylon6/ABS/PC (3/2/3) | | | | | | | |
| | wt. % imides | | | | | | |
| a | 0 | 138.5 | 55.5 | 2372 | 399.1 | 50.8 | 87.8 |
| b | PI2, 20% | 140.6 | 64.2 | 2593 | 673.6 | 53.5 | 96.6 |
| - Blend - | | | | | | | |
| 20. Nylon6/ABS/PC (9/1/9) | | | | | | | |
| | wt. % imides | | | | | | |
| a | 0 | 22.2 | 60.4 | 2338 | 430.9 | 46.7 | 86.7 |
| b | PI2, 20% | 131.5 | 65.7 | 2566 | 513.6 | 55.1 | 99.3 |

Example 21

This example illustrates blends of poly(vinyl chloride) (PVC) homopolymer of molecular weight (as judged by Fikentscher K value of 58) useful for fabrication into sheeted or blown objects, a terpolymer incompatible with PVC of an alpha-methylstyrene/methyl methacrylate/ethyl acrylate (24/74/2) terpolymer of MW 110,000, and a poly(N-methyldimethylglutarimide) of MW 90,000 which had been reacted with dimethyl carbonate to reduce free acid and anhydride. The formulation used was :

| Component | phr |
|---|---|
| Oxy 190 PVC (K°58) | 100 |
| TM-181 (tin stabilizer) | 2 |
| Irisol-N (1% in PVC) (toner) | 0.06 |
| Aldo MS lubricant | 0.6 |
| OP Wax lubricant | 0.2 |
| K-120ND processing aid | 1 |
| K-175 lubricating-processing aid | 1 |
| BTA-733 MBS impact modifier | 16 |
| Modifier for raising service temperature | 20 or 40 |

In this example, the polyglutarimide (designated Modifier 1) and alpha-methylstyrene terpolymer (designated Modifier 2) were pre-compounded before blending with the PVC. Pre-compounding was accomplished in a 20.3 mm. single screw extruder with a compounding screw and a 20.3 mm. stranding die. All heating zones were set at 232°C, and screw speed was 100 rpm. All ingredients of the PVC blend were dry-blended and then milled on an oil-heated two mill roll at 185°C for six minutes. The sheet as removed was then compression molded to form 165 mm. by 254 mm. by 3.2 mm. plaques by pressing for 3 minutes at 53000 kg. at 105°C, then for 2 minutes at 370,000 kg. at 185°C., then cooling for 6 minutes at 70°C. These plaques were then cut to 60.3 mm. by 101.6 mm. pieces for measurement of optical properties. Four samples were prepared and tabulated below. Ranking of clarity was visual : 1 is clearest. The improved clarity of Example 21 -d over Example 21-b shows improved compatibility from the presence of the polyglutarimide.

| | | Clarity, Rank |
|---|---|---|
| Ex. 21-a | No modifier (control) | light haze, 1 |
| Ex. 21-b | Modifier 2, 20 phr | opaque, 4 |
| Ex. 21-c | 50:50 Mod. 1: Mod. 2 blend:20 phr | haze, 2 |
| Ex. 21-d | 50:50 Mod. 1: Mod. 2 blend:40 phr | haze, 3 |

Examples 22-24

These three examples illustrate blends containing poly(butylene terephthalate) and a second matrix polymer whose properties are improved by compatibilization with a polyglutarimide. In Example 22, the blend of poly(butylene terephthalate) (PBT) with a styrene-acrylonitrile (SAN) copolymer shows improvements in stress properties and heat distortion resistance, although the impact strength is decreased. In Example 23, where ABS is the second matrix polymer, a substantial increase in heat distortion resistance is seen, although impact strength is lowered. In Example 24, the PBT/polycarbonate blend surprisingly shows a decrease in most

properties, although the ternary blend is stiffer. Because a highly imidized higher molecular weight polyglutarimide was used in this blend, it is felt that better results will be obtained if the molecular weight, and possibly the degree of imidization, is decreased for the glutarimide component.

Examples 25-26

These examples illustrate compatibilization of blends of PBT/SAN/polycarbonate varying in compositional ratios with a polyglutarimide. Essentially all properties are retained and heat distortion is increased for both Examples.

Examples 27-28

These examples illustrate the use of polyglutarimides in compatibilizing poly(ethyl terephthalate) with a second matrix polymer containing styrene/acrylonitrile units. In Example 27, where no rubber phase is present, the blend of properties are not improved by the selected polyglutarimide studied. With the rubber-containing ABS in Example 28, certain combinations show improvement in either impact strength or heat distortion temperature.

Examples 29-30

These examples illustrate blends of PET with other engineering resins. When polyglutarimide is present with polyacetal as in Example 29, the heat distortion temperature is substantially improved with only slight diminution of other properties. With phenoxy resin in Example 30, the major effect is enhancement of elongation and yield stress. The ternary blends, especially with $PI_3$ show greatly improved light transmittance (Hunter value of luminous transmittance). Values on 3.2 mm plaques were :

a) 17% transmittance ;
b) 22%
c) 49%
d) 26%
e) 74%

Examples 31-32

These examples illustrate poly(bisphenol-A carbonate), otherwise known as poly(p,p'-isopropylidenebisphenol carbonate) as a matrix polymer. In blends with styrene/acrylonitrile (Example 31), a slight advantage in elongation to break and yield stress is seen. With polypropylene (Example 32), with which neither other component is separately compatible, improvements in toughness were seen, but accompanied by a drop in heat distortion temperature.

Examples 33-34

These examples illustrate the use of a partially or totally-acid reduced polyglutarimides in blends. In Example 33, a fully acid-reduced polyglutarimide imparted improved elongation at break and improved yield stress. In Example 34, polyglutarimide PI13A is a fully acid-reduced polymer derived from PI13 by reaction with dimethyl carbonate.

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 22. PBT/SAN (3/2) | | | | | | | |
| | wt. % imides | | | | | | |
| a | 0 | 125.1 | 69.8 | 2683 | 407 | 59.9 | 91.0 |
| b | PI3, 10% | 140.9 | 74.7 | 2828 | 357 | 54.2 | 95.4 |
| - Blend - | | | | | | | |
| 23. PBT/ABS (9/1) | | | | | | | |
| | wt. % imides | | | | | | |
| a | 0 | 198 | 52 | 2214 | 2279 | 470.2 | 60 |
| b | PI3, 20% | 201 | 57 | 2414 | 992 | 115.9 | 87 |
| - Blend - | | | | | | | |
| 24. PBT/PC (1/1) | | | | | | | |
| | wt. % imides | | | | | | |
| a | 0 | 183 | 59 | 2124 | buckle | 514.0 | 109 |
| b | PI13, 10% | 16 | 63 | 2462 | 636 | 80.6 | 109 |

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 25. PBT/SAN/PC (3/2/3) | | | | | | | |
| | wt. % imides | | | | | | |
| a | 0 | 143 | 69 | 2607 | 1908 | 547.7 | 98 |
| b | PI4, 20% | 129 | 74 | 2600 | 1802 | 585.7 | 104 |
| - Blend - | | | | | | | |
| 26. PBT/SAN/PC (9/1/9) | | | | | | | |
| | wt. % imides | | | | | | |
| a | 0 | 166 | 62 | 2290 | buckle | 525.5 | 106 |
| b | PI4, 20% | 117 | 67 | 2427 | buckle | 536.8 | 110 |
| - Blend - | | | | | | | |
| 27. PET/SAN (3/2) | | | | | | | |
| | wt. % imides | | | | | | |
| a | 0 | 69 | 69 | 2634 | 330 | 85.2 | 90 |
| b | PI4, 10% | 141 | 69 | 2703 | 286 | 62.5 | 88 |
| c | PI4, 20% | 74 | 68 | 2655 | 226 | 63.2 | 89 |
| d | PI2, 10% | 3 | 0 | 2703 | 252 | 78 | 89 |

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| -Blend- | | | | | | | |
| 28. PET/ABS (1/1) | | | | | | | |
| | wt. % imides | | | | | | |
| a | 0 | 242 | 46.3 | 2117 | 1693 (80% ductile)<br>367.9 (20% brittle) | 387.9 | 77.4 |
| b | PI2, 10% | 200 | 51.1 | 2407 | 1009 (100% ductile) | 165.0 | 82.5 |
| c | PI13, 10% | 188 | 53.2 | 2434 | 1009 (100% ductile) | 164.0 | 77.6 |
| d | PI6, 10% | 201 | 51.1 | 2407 | 1218 (80% ductile)<br>624.8 (20% brittle) | 333.3 | 77.2 |
| e | PI14, 10% | 52.1 | 50.1 | 2393 | 233.9 | 86.7 | 74.1 |
| f | PI13, 5%<br>PI14, 5% | 105.6 | 50.8 | 2386 | 375.9 | 92.4 | 80.0 |
| g | PI2, 5%<br>PI6, 5% | 205 | 51.5 | 2372 | 1330 (100% ductile) | 156.6 | 84.6 |

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 29. PET/Polyacetal (1/1) | | | | | | | |
| | wt. % imides | | | | | | |
| a | 0 | 315 | 59.3 | 2614 | 1826 (60% ductile) 310.3 (40% brittle) | 72.7 | 83.4 |
| b | PI12, 10% | 300 | 62.3 | 2807 | 1506 (20% ductile) 1031 (80% brittle) | 68.8 | 96.2 |
| - Blend - | | | | | | | |
| 30. PET/Phenoxy (1/1) | | | | | | | |
| | wt. % imides | | | | | | |
| a | | 81 | 62.8 | 2540 | 1287 (75% ductile) 860.0 (25% brittle) | 248.1 | N |
| b | PI2, 10% | 98 | 64.3 | 2720 | 395.2 | 94.8 | 72.1 |
| c | PI12, 10% | 171 | 62.8 | 2610 | 2851 (100% ductile) | 107.0 | 70.8 |
| d | PI14, 10% | 132 | 62.8 | 2660 | 120.7 | 107.0 | 69.8 |
| e | PI3, 10% | 165 | 65.0 | 2821 | 2274.5 (60% ductile) 769.0 (40% brittle) | 132.2 | 70.1 |

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 31. PC/SAN (3/1) | | | | | | | |
| | wt. % imides | | | | | | |
| a | 0 | 139 | 69.0 | 2903 | 67.8 (notched) | 478.6 | 123.3 |
| b | PI4, 20% | 149 | 72.7 | 2793 | 80.7 (notched) | 539.5 | 118.8 |
| c | PI2, 20% | 143 | 72.2 | 2903 | 44.0 (notched) | 496.3 | 123.3 |
| - Blend - | | | | | | | |
| 32. PC/PP | | | | | | | |
| | wt. % imides | | | | | | |
| a | 0 | 7 | 37.7 | 1830 | 56.2 (notched) | 31.9 | 121.5 |
| b | PI13, 20% | 25 | 40.1 | 1620 | 90.1 (notched) | 45.1 | 104.3 |
| - Blend - | | | | | | | |
| 33. SAN/PVDF (3/2) | | | | | | | |
| | wt. % imides | | | | | | |
| a | 0 | 3 | 0 | 3090 | | 55 | 95 |
| b | PI6, 10% | 35 | 72 | 3158 | | 52 | 95 |

TABLE 5-Properties of Multicomponent Polymer Blends Containing Polycarbonate as a Component and an Imidized Acrylic as a Compatibilizer

| Ex. No. | | Elongation @ Break (%) | Yield Stress (MPa) | Modulus (MPa) | Izod Unnotched (J/m) | Dynatup Load at Break (kg) | DTUFL (1.82 MPa, °C) |
|---|---|---|---|---|---|---|---|
| - Blend - | | | | | | | |
| 34. Phenoxy/ABS (1/1) | | | | | | | |
| | wt. % imides | | | | | | |
| a | 0 | 105.6 | 52.0 | 2448 | 2472.3 (ductile) | 476.7 | 76.1 |
| b | PI12, 10% | 111.4 | 54.8 | 2552 | 2798.2 (ductile) | 515.6 | 82.8 |
| c | PI13A, 10% | 105.6 | 55.0 | 2517 | 2274 (ductile) | 505.5 | 81.5 |

Example 35

In this example is shown improvement of toughness for blends of PET, PCL and commercial non-functionalized impact modifiers. In these systems, it was further attempted to catalyze the reaction of the glutarimide with the PCL by means of sodium hydroxide, but the tests reported showed no improvement in the specific properties measured.

The PI2 polyglutarimide chosen was known to be reactive with the chosen polycaprolactam, and catalysis by sodium hydroxide was known for that system. Acryloid KM-330 is a core/shell poly(butyl acrylate) / /poly(methyl methacrylate) impact modifier for poly(vinyl chloride), while Acryloid KM-653 is a core-shell poly(butadienestyrene) / /poly(methyl methacrylate) impact modifier for poly(vinyl chloride). Neither contains functional groups reactive with the amine end groups of polycaprolactam. The sodium hydroxide, when used, was evaporated from an ethanolic solution onto the polycaprolactam prior to compounding the blends.

In the absence of impact modifier, unnotched impact strength was raised by the presence of the polyglutarimide. With either impact modifier present, the further presence of polyglutarimide substantially improved the impact strength. In no case was the presence of catalyst effective in further raising the impact strength.

| Weight Percent | | | | | | | |
|---|---|---|---|---|---|---|---|
| Ex. 35 | PCL | PET | Impact Modifier (*) | PI2 | NaOH (ppm) | Notched Izod, J/m | Unnotched Izod, J/m |
| a | 50 | 50 | — | — | — | 20 | 357 |
| b | 50 | 50 | — | — | 500 | 20 | 330 |
| c | 45 | 45 | — | 10 | — | 23 | 626 |
| d | 45 | 45 | — | 10 | 500 | 23 | 305 |
| e | 42.5 | 42.5 | 15(A) | — | — | 27 | 265 |
| f | 38.25 | 38.25 | 15(A) | 8.5 | - | 72 | 1495(**) |
| g | 38.25 | 38.25 | 15(A) | 8.5 | 500 | 45 | 950 |
| h | 42.5 | 42.5 | 15(B) | — | — | 28 | 302 |
| i | 38.25 | 38.25 | 15(B) | 8.5 | — | 43 | 593(**) |
| j | 38.25 | 38.25 | 15(B) | 8.5 | 500 | 36 | 854 |

(*) (A) refers to KM-330 acrylic modifier; (B) refers to KM-653 butadiene impact modifier.

(**) Value for brittle breaks; ductile breaks were also observed.

**Claims**

1. A compatible polymeric blend comprising :
   a) polyglutarimide containing units of the structure

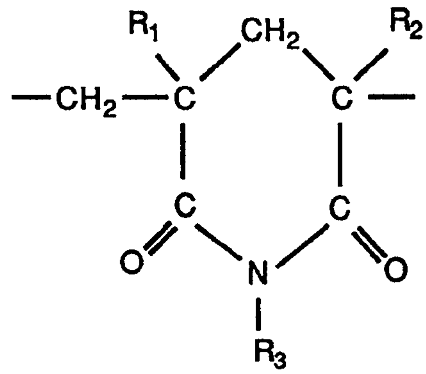

wherein $R_1$ and $R_2$ are individually H or C1-C20 alkyl, and $R_3$ may be H, alkyl,cycloalkyl, aryl, alkaryl, or aralkyl, substituted alkyl, substituted cycloalkyl, substituted aryl, substituted alkaryl, substituted aralkyl, heterocyclic, or substituted heterocyclic ;

b) first matrix polymer compatible with the polyglutarimide ;

c) second matrix polymer compatible with the polyglutarimide and, optionally, incompatible with the first matrix polymer ;

with the proviso that neither of the matrix polymers contains units formally derived from vinyl alcohol, and with the further proviso that if one matrix polymer is an aromatic polycarbonate, the other matrix polymer cannot be a polymer containing units of styrene and of acrylonitrile.

2. A composition as claimed in Claim 1, further comprising at least one further matrix polymer not containing units formally derived from vinyl alcohol, the said further matrix polymer being compatible with the polyglutarimide and, optionally is incompatible with either the first and/or the second matrix polymer.

3. A composition as claimed in Claim 1 or 2 wherein the polyglutarimide is a non- acid-reduced or a partially acid-reduced polyglutarimide.

4. A composition as claimed in any preceding Claim wherein $R_1$ and $R_2$ are H or ($C_1$ to $C_4$)-alkyl, preferably $R_1$, $R_2$, and $R_3$ are $CH_3$.

5. A composition as claimed in any preceding Claim, wherein the weight-average molecular weight of the polyglutarimide is from 100,000 to

6. A composition as claimed in any preceding Claims which further contains one or more of the following : at least one component compatible with at least one of the other components of the blend ; at least one filler; fibrous reinforcement.

7. A composition as claimed in any preceding Claim, wherein the polyglutarimide is chemically grafted to one or more of the matrix polymers.

8. A composition as claimed in any preceding Claim wherein the first matrix polymer is a polymer containing units of vinyl chloride preferably poly(vinyl chloride), a polyamide preferably polycaprolactum, an aromatic polyester preferably, poly(ethylene terephthalate), and /or poly(butylene terephthalate), an aromatic polycarbonate preferably formed from p,p'-isopropylidenebisphenol, or a copolymer or graft copolymer containing styrene-acrylonitrile copolymer, preferably styrene-acrylonitrile copolymer or ABS polymer.

9. A composition as claimed in any preceding Claim, wherein the second matrix polymer is a bisphenol-epichlorohydrin copolymer, poly(vinylidene fluoride), polyolefin preferably polypropylene, a copolymer or graft copolymer containing units of styrene and acrylonitrile, preferably ABS polymer, copolymer, aromatic polyester preferably polyethylene terephthalate or polybutylene terephthalate, aromatic polycarbonate preferably formed from p,p'-isopropylidenebisphenol, a polyacetal preferably derived from formaldehyde, a polymer containing units of alkyl methacrylate preferably methyl methacrylate and cyclohexylmethacrylate, or a copolymer containing units of vinyl aromatic monomer and alkyl methacrylate preferably alphamethyl styrene-methylmethacrylate copolymer.

**10.** A composition as claimed in any of Claims 2 to 9, wherein the further matrix polymer is a copolymer or graft copolymer containing styreneacrylonitrile copolymer.

**11.** A composition as claimed in any preceding Claim in the form of a molded object, sheet, or film.

**12.** A process for compatibilizing a mixture of polymers comprising forming, by application of heat and shear sufficient to form an intimate mixture, an admixed composition as claimed in any preceding Claim wherein the matrix polymers comprise two normally incompatible polymers and the polyglutarimide is present in a sufficient amount to compatibilise the matrix polymers, for example 1 to 30 weight percent of the sum of the polyglutarimide plus matrix polymers, the admixture subsequently being shaped, optionally after processing into a cooled pellet or sheet form, by extrusion or molding.

**13.** A process for compatibilizing a mixture of polymers comprising forming, by application of heat and shear sufficient to form an intimate mixture, an admixed composition as claimed in any preceding Claim wherein the polyglutarimide is present in a sufficient amount to compatibilise matrix polymers, of which at least two are compatible with the polyglutarimide, the said compatibility of at least one being caused by a grafting reaction between the matrix polymer and the polyglutarimide, caused by the application of said heat and shear, the admisture subsequently being shaped by extrusion or molding.

**14.** A process as claimed in Claim 13 wherein the admixture further contains catalyst for the grafting reaction.